# EUROPÄISCHE PATENTANMELDUNG

(11) **EP 0 694 571 A1**
(43) Veröffentlichungstag der Anmeldung: **31.01.1996**
(21) Anmeldenummer: 95109601.5
(22) Anmeldetag: 21.06.1995
(51) Int. Cl.: C08G 59/10, C08G 59/68, C08L 63/00

(54) **Elastisches, Amin-modifiziertes Einkomponenten-Epoxidharz-System mit hoher Lagerstabilität**

(30) Priorität: 01.07.1994 DE 4423138
(71) Anmelder: HOECHST AKTIENGESELLSCHAFT, D-65926 Frankfurt am Main (DE)
(72) Erfinder: Marten, Manfred, D-55126 Mainz (DE); Wehner, Bernhard, D-65606 Villmar (DE)

(57) **Zusammenfassung**

Elastische Epoxidharz-Zusammensetzung enthaltend (A) Verbindungen mit mindestens zwei 1,2-Epoxidgruppen, die durch Umsetzung von Polyepoxiden (A1) mit mindestens zwei Epoxidgruppen pro Molekül und Polyoxyalkylenmonoaminen (A2) sowie gegebenenfalls Polycarbonsäuren (A3) erhältlich sind,(B) gegebenenfalls Verbindungen mit mindestens zwei 1,2-Epoxidgruppen, die durch Umsetzung von Polyepoxiden (B1) mit mindestens zwei 1,2-Epoxidgruppen pro Molekül und sterisch gehinderten aliphatischen Monoaminen (B2) erhältlich sind, (C) 1,2-Epoxidverbindungen, die ausgewählt sind aus Polyepoxiden, die verschieden sind von (A1) und (B1), und den nicht umgesetzten Anteilen der Verbindungen (A1) oder (B1) aus der Herstellung der Verbindungen (A) und (B), (D) ω-Imidazolyl-alkanoguanamine, (E) latente Härtungsmittel, und (F) gegebenenfalls weitere Zusätze.

## Beschreibung

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen und Klebstoffen. Diese zum Beispiel mit Polyaminen gehärteten aromatischen Epoxidharze besitzen neben guter Chemikalien- und Lösungsmittelbeständigkeit eine gute Haftfestigkeit auf vielen Untergründen. Häufig ist die Anwendbarkeit dieser Harz/Härter-Systeme jedoch begrenzt durch eine unzureichende Elastizität bzw. Flexibilität im vernetzten Zustand. Insbesondere für Anwendungen, bei denen Temperaturwechselbelastungen durch eine hohe Dehnbarkeit der Beschichtungsstoffe aufgefangen werden müssen, reicht die Elastizität der unmodifizierten Standardepoxidharzsysteme nicht aus. Auf dem Klebstoffsektor werden Epoxidharzsysteme benötigt, die noch bei tiefen Temperaturen, d. h. unter 0 °C, ausreichend elastisch sind. Beispielsweise werden in der Automobilindustrie Epoxidharzklebstoffe verwendet, die in ausgehärtetem Zustand nur wenig flexibel sind. Die mit ihnen erhaltenen Verklebungen weisen zwar eine hohe Zugscherfestigkeit auf, platzen aber bei seitlichem Angriff durch Abschälen leicht ab.

Die ausgehärteten Beschichtungen und Klebenähte kommen häufig mit aggressiven Chemikalien und Lösungsmitteln in Berührung. Auch bei diesen Bedingungen soll die Beschichtung oder die Klebenaht widerstandsfähig sein.

Die elastischen Epoxidsysteme müssen deshalb so aufgebaut sein, daß sie der gehärteten Masse ein möglichst hohe Chemikalienbeständigkeit verleihen.

Für die verschiedensten Anwendungen werden Einkomponenten-Beschichtungs- und Klebstoffe benötigt, die extrem schnell verarbeitet werden können und gleichzeitig eine gute Lagerstabilität aufweisen.

Prinzipiell kann man extern durch Weichmacherzusatz oder intern durch Verringerung der Vernetzungsdichte die Elastizität von Epoxidharzsystemen erhöhen. Externe Elastifizierungsmittel sind jedoch nicht reaktiv und werden nicht in das Duromer-Netzwerk eingebaut. Diese Art der Modifizierung ist auch nur auf wenige Anwendungsgebiete beschränkt, da sie eine Reihe von Nachteilen aufweist. So führen diese Zusätze zu einer starken Störung der Duromerstruktur, sind in ihrem Weichmachungseffekt bei tiefen Temperaturen begrenzt und neigen bei Temperaturbeanspruchung und Alterung zum Ausschwitzen, wobei die gehärteten Systeme verspröden. Zur internen Erhöhung der Elastizität werden mit den Epoxidharzen oder Härtern reagierende Verbindungen zugesetzt, die in die Vernetzung mit einbezogen werden. Die elastifizierende Wirkung wird durch Einbau von langkettigen aliphatischen oder stark verzweigten Zusätzen in die Harz- oder Härterkomponente erreicht.

Bei Vazirani [Adhesives Age, Oct. 1980, S. 31 - 35], werden flexible Ein- und Zweikomponenten-Epoxidharzsysteme auf Basis von Polyoxypropylendi- und -triaminen beschrieben. Diese Amine werden kommerziell von der Firma Texaco unter dem Handelsnamen "®Jeffamine" angeboten. Die Härtung des Einkomponentensystems erfolge mit Dicyandiamid.

Aus der US-Patentschrift 4,423,170 sind wäßrige Epoxidharz-Zusamensetzungen bekannt, die aus (A) Diepoxiden, erhalten durch Umsetzung von Diepoxiden und Polyoxyalkylenaminen mit einer Molmasse von 900 bis 2500 g/mol, und (B) einem latenten Härter bestehen.

Gegenstand der EP-B 0 109 174 ist eine Epoxidharz-Zusammensetzung enthaltend (A) ein Polyepoxid und (B) ein Aushärtungsmittel, dadurch gekennzeichnet, daß ein Polyepoxid mit 50 bis 70 Gew.-% eines Polyoxyalkylenmonoamins mit einer Molmasse von 900 bis 2000 g/mol umgesetzt wurde. Die hier beschriebene Harz-Härter-Mischung ist in Form eines Ein- oder Zweikomponentensystem brauchbar als flexibler Klebstoff, zeichnet sich durch eine niedrige Viskosität aus und kann deshalb ohne Zugabe von Lösungsmittel verwendet werden.

In der Patentanmeldung DE-P 43 42 721.9 wird eine Epoxidharz-Zusammensetzung beschrieben, bestehend aus Verbindungen (A), die mindestens zwei 1,2-Epoxidgruppen enthalten, die Umsetzungsprodukte sind aus Verbindungen (A1) mit mindestens zwei 1,2-Epoxidgruppen pro Molekül, Polyoxyalkylenmonoaminen (A2) mit einer Molmasse von 130 bis 900 g/mol und gegebenenfalls von Polyoxyalkylenmonoaminen (A3) mit einer Molmasse von 900 bis 5000 g/mol und gegebenenfalls von Polycarbonsäuren (A4) und Härtungsmitteln (B) und gegebenenfalls üblichen Zusätzen (C). In der Patentanmeldung DE-P 43 42 722.7 wird eine elastische Epoxidharz-Zusammensetzung beschrieben, bestehend aus Verbindungen (A) mit mindestens zwei 1,2-Epoxidgruppen, die Umsetzungsprodukte sind aus Verbindungen (A1) mit mindestens zwei 1,2-Epoxidgruppen pro Molekül, Polyoxyalkylenmonoaminen (A2) mit einer molaren Masse (Zahlenmittel) größer als 900 g/mol, die gegebenenfalls einen molaren Anteil von bis zu 20 % Oxyäthyleneinheiten bezogen auf die Gesamtmenge aus Oxypropylen- und Oxyäthyleneinheiten enthalten können, gegebenenfalls Polycarbonsäuren (A3), und Härtungsmitteln (B) und gegebenenfalls üblichen Zusätzen (C). Beide Schriften offenbaren reaktive Klebstoffe, die hohe Schäl- und Zugscherfestigkeiten liefern und sich insbesondere durch einen hohen Korrosionsschutz des gehärteten Systems auf nicht entfetteten Blechen auszeichnen.

Weiterhin ist aus der DE-P 44 10 786.2 eine Epoxidharzzusammensetzung bekannt, bestehend aus Verbindungen (A), die mindestens zwei 1,2-Epoxidgruppen enthalten, die Umsetzungsprodukte sind aus Verbindungen (A1) mit mindestens zwei 1,2-Epoxidgruppen pro Molekül, gegebenenfalls in Abmischung mit Mono-Epoxiden (A2), Polyoxyalkylenaminen (A3) und gegebenenfalls Polycarbonsäuren (A4), Verbindungen (B), die mindestens zwei 1,2-Epoxidgruppen enthalten, die Umsetzungsprodukte sind aus Verbindungen (B1) mit mindestens zwei 1,2-Epoxidgruppen pro Molekül, gegebenenfalls in Abmischung mit Mono-Epoxiden (B2), sterisch gehinderten Aminen (B3), und 1,2-Epoxidverbindungen (C), die nicht gleich (A1), (A2), (B1) oder (B2) sind oder nicht umgesetzte Anteile der Verbindungen (A1), (A2), (B1) und (B2) aus der Herstellung der Verbindungen (A) und (B) sind, Härtungsmitteln (D) und gegebenenfalls weiteren Zusätzen (E).

Mit der Epoxidharz-Zusammensetzung nach DE-P 44 10 786.2 werden gegenüber den in DE-P 43 42 721.9 und DE-P 43 42 722.7 beschriebenen Systemen bei gleichbleibend guten Korrosionsschutz- und Festigkeitswerten niedrigerviskose Epoxid- bzw. Epoxid-Härter-Mischungen erhalten, die außerdem eine verbesserte Tieftemperaturelastizität aufweisen.

Aus allen vorstehend aufgeführten Dokumenten zum Stand der Technik sind latente Härter, insbesondere Dicyandiamid, als Härtungsmittel für elastische Epoxidharze bekannt. In diesen Schriften wird auch die Mitverwendung von Beschleunigern offenbart. Dabei kann er sich nach den Beschreibungen der DE-P 43 42 721.9, DE-P 43 42 722.7 und DE-P 44 10 786.2 u.a. um Imidazole handeln.

Aus der Japanischen Patentschrift 5-163331 ist eine Epoxidharzzusammensetzung bekannt aus 100 Gewichtsteilen Epoxidharz, soviel Dicyandiamid, daß pro Glycidylgruppe 0,1 bis 1,2 Amino-Wasserstoffatome vorhanden sind, und jeweils 0,1 bis 10 Gewichtsteilen von zwei ω-Imidazolyl-alkanoguanaminen der Formel 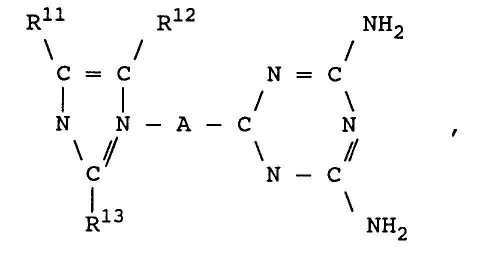
in der bedeuten A eine Alkylengruppe mit 1 bis 8 Kohlenstoff-Atomen, die gegebenenfalls mit Alkylgruppen zusätzlich substituiert sein kann; R¹¹, R¹² und R¹³ Wasserstoff oder eine Alkylgruppe mit 1 bis 20 Kohlenstoff-Atomen. Unter den erfindungsgemäßen ω-Imidazolyl-alkanoguanaminen werden regelmäßig auch solche verstanden, deren Alkylengruppe mit weiteren Alkylgruppen substituiert ist.

Dieses Harz-Härtersystem zeigt eine gute Lagerstabilität und härtet in kurzer Zeit schon bei niedrigen Temperaturen. Als Epoxidharze werden der Beschreibung nach Glycidylverbindungen von Phenolen, Alkoholen, aromatischen Aminen sowie alicyclische und heterocyclische Epoxidharze verwendet.

Die erhaltenen Systeme sind jedoch bei Raumtemperatur und bei höherer Temperatur spröde. Die Haftung auf Substraten wie Blech, Kunststoffen oder Textilien ist ungenügend.

Allen nach dem Stand der Technik genannten Veröffentlichungen ist gemeinsam eine Härtungszeit von 5 Minuten bis mehreren Stunden bei 140 °C bis zu ca. 200 °C, je nach Harz-Härter-System und Anwendungszweck.

Aufgabe der vorliegenden Erfindung ist es, eine Einkomponenten Epoxidharz-Härter-Zusammensetzung bereitzustellen, aus der sich elastische Klebstoffe und Beschichtungsmassen herstellen lassen, die sich durch folgende Eigenschaften auszeichnen:
1. Nach der Aushärtung soll eine elastische bis hochelastische Masse erhalten werden.
2. Die Einkomponenten-Harz-Härter-Mischung sollte über mehrere Wochen lagerstabil sein.
3. Die Aushärtungszeit des Harz-Härter-Systems soll extrem kurz sein, gefordert wird eine Zeit deutlich unter 5 Minuten, z.B. 1 Minute.
4. Die ausgehärtete Masse soll hochvernetzt sein und gegen Chemikalien (Salzlösungen, verdünnte Säuren und Basen) sowie Lösungsmittel beständig sein.
5. Das Harz-Härter-System soll möglichst niedrigviskos sein, d.h. das Epoxyharz muß eine Viskosität von unter 25 000 mPas, insbesondere unter 10 000 mPas, aufweisen.

Mit den nach dem Stand der Technik bekannten Systemen gelingt es nicht, alle geforderten Eigenschaften gleichzeitig zu erreichen.

Überraschenderweise wurde die Aufgabe erfindungsgemäß gelöst durch eine Epoxidharz-Zusammensetzung enthaltend
(A) Verbindungen mit mindestens zwei 1,2-Epoxidgruppen, die durch Umsetzung von Polyepoxiden (A1) mit mindestens zwei Epoxidgruppen pro Molekül und Polyoxyalkylenmonoaminen (A2) sowie gegebenenfalls Polycarbonsäuren (A3) erhältlich sind,
(B) gegebenenfalls Verbindungen mit mindestens zwei 1,2-Epoxidgruppen, die durch Umsetzung von Polyepoxiden (B1) mit mindestens zwei 1,2-Epoxidgruppen pro Molekül und sterisch gehinderten aliphatischen Monoaminen (B2) erhältlich sind,
(C) 1,2-Epoxidverbindungen, die ausgewählt sind aus Polyepoxiden, die verschieden sind von (A1) und (B1), und den nicht umgesetzten Anteilen der Verbindungen (A1) oder (B1) aus der Herstellung der Verbindungen (A) und (B),
(D) ω-Imidazolyl-alkanoguanamine,
(E) latente Härtungsmittel,
(F) und gegebenenfalls weitere Zusätze.

Die Verbindungen (A1) und (A2) werden bevorzugt in solchen Mengen eingesetzt, daß das Verhältnis der Anzahl der Epoxygruppen in (A1) zu der der (primären) Aminogruppen in (A2) 10:1 bis 5:4 beträgt, besonders bevorzugt 5:1 bis 3:2. Derselbe Bereich für das Verhältnis der Anzahl der funktionellen Gruppen von (B1) und (B2) ist bevorzugt.

Soweit die Komponente (B) in der Mischung zugegen ist, ist ihr Massenanteil bezogen auf die Summe der Massen von (A) und (B) unter 40 %, bevorzugt 5 bis 35 %.

Da die Anzahl der Epoxygruppen in (A1) bzw. (B1) die Anzahl der (primären) Aminogruppen in (A2) bzw. (B2) üblicherweise übersteigt, verbleibt ein wesentlicher Anteil an unreagierten (A1) bzw. (B1) in der Mischung. Zusätzlich können weitere Epoxidverbindungen (C) zugefügt werden. Der Massenanteil der unreagierten und zugefügten Epoxidverbindungen (C) bezogen auf die Summe der Massen von (A), (B) und (C) ist bis zu 90 %, bevorzugt bis zu 80 %.

Werden Verbindungen (A3) eingesetzt, so beträgt das Verhältnis der Anzahl der Carboxylgruppen in (A3) zur Anzahl der Epoxygruppen in (A1) bis zu 1:3, bevorzugt 1:20 bis 1:5.

Als Poly-Epoxidverbindungen (A1), (B1) und (C) kommen eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther, die sich von mehrwertigen Alkoholen oder Phenolen, insbesondere Bisphenolen sowie Novolaken ableiten und deren Molmassen bezogen auf die Anzahl der Epoxygruppen M_{E} ("Epoxidäquivalentgewichte", "EV-Werte") zwischen 150 und 500, insbesondere jedoch zwischen 150 und 250 g/mol, liegen.

Besonders bevorzugt sind Glycidyläther (A11) von Alkoholen oder Phenolen mit jeweils mindestens zwei Hydroxygruppen, wobei jeweils mindestens zwei der Hydroxygruppen glycidyliert sind, Polyepoxide (A12) von mehrfach ungesättigten aliphatischen oder gemischt aliphatisch-aromatischen Verbindungen und Glycidylester (A13) von mehrwertigen organischen Säuren.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, insbesondere als Epoxidverbindungen (A1), werden flüssige Diglycidyläther auf Basis von Bisphenol A und Bisphenol F mit einem Epoxidäquivalentgewicht von 180 bis 190 g/mol.

Es können auch Polyglycidyläther von Polyalkoholen verwendet werden, wie z. B. Äthandiol-1,2-diglycidyläther, Propandiol-1,2-diglycidyläther, Propandiol-1,3-diglycidyläther, Butandioldiglycidyläther, Pentandioldiglycidyläther, Neopentylglykoldiglycidyläther, Hexandioldiglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits, Sorbits, Polyglycidyläther von oxalkylierten Polyolen (wie z. B. des Glycerins, Trimethylolpropans und Pentaerythrits), Diglydicyläther des Cyclohexandimethanols, Bis-(4-hydroxycyclohexyl)methans und 2,2-Bis-(4-hydroxycyclohexyl)propans, Polyglycidyläther des Rizinusöls, Triglycidyltris-(2-hydroxyäthyl)-isocyanurat. Ganz besonders bevorzugt, insbesondere als Epoxidverbindungen (B1), werden Polyoxypropylenglykoldiglycidyläther mit einem Epoxidäquivalentgewicht von 150 bis 800, insbesondere von 300 bis 400 g/mol, eingesetzt.

Weiterhin kommen als Komponenten (A1) und (B1) in Frage Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester (A13) von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure erhält, wie Oxalsäure, Bernsteinsäure, Adipinsäure, Glutarsäure, Phthalsäure, Terephthalsäure, Tetrahydrophthalsäure, Hexahydrophthalsäure und 2,6-Naphthalindicarbonsäure. Beispiele sind Adipinsäurediglycidylester, Phthalsäurediglycidylester und Hexahydrophthalsäurediglycidylester. Andere geeignete Glycidylester sind höhere Dicarbonsäurediglycidylester, wie z. B. von dimerisierter bzw. trimerisierter Linolensäure. Weiterhin seien genannt Glycidylester ungesättigter Carbonsäuren und epoxidierte Ester von ungesättigten Alkoholen bzw. ungesättigten Carbonsäuren.

Zusätzlich zu den Polyglycidyläthern können geringe Mengen von Monoepoxiden (reaktive Verdünner), wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther eines höheren isomeren Alkoholgemisches, Glycidyläther einer Mischung von C₁₂ bis C₁₃ Alkoholen, Phenylglycidyläther, Kresylglycidyläther, p-t-Butylphenylglycidyläthers, p-Octylphenylglycidyläther, p-Phenyl-phenylglycidyläther, Glycidyläther eines oxalkylierten Laurylalkohols sowie Monoepoxide wie beispielsweise epoxidierte einfachungesättigte Kohlenwasserstoffe (Butylen-, Cyclohexen-, Styroloxid), halogenhaltige Epoxide, wie z. B. Epichlorhydrin, in Massenanteilen bis zu 30 %, vorzugsweise 10 bis 20 %, bezogen auf die Masse der Polyglycidyläther mitverwendet werden.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Es können jeweils auch Mischungen von mehreren Epoxidharzen verwendet werden.

Als Polyoxyalkylenmonoamine (A2) sind besonders geeignet die α-Alkoxy-ω-2-aminoalkylpolyoxyalkylene, z.B. Polyoxyalkylenmonoamine der Formel 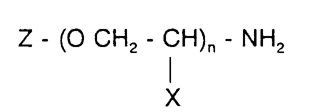
wobei X Wasserstoff, ein Methyl- oder Äthylrest, Z ein Kohlenwasserstoffrest mit 1 bis 5 Kohlenstoffatomen und n ein Mittelwert ist, der zwischen 2 und 50 liegt.

Bevorzugt werden Polyoxyalkylenmonoamine eingesetzt, bei denen der Aminoalkylrest ein 2-Aminopropylrest ist und die Alkylenreste ausgewählt sind aus Äthylen- und 1,2-Propylenresten, die jeweils für sich, in Mischung oder in Blockstruktur, die Polyoxyalkylenkette bilden können.

Bevorzugt werden Polyoxyalkylenmonoamine der Formel

Z - (O-CH₂-CH₂)_{y} - [O-CH₂-CH(CH₃)]ₓ - NH₂

eingesetzt, in der Z ein Kohlenwasserstoffrest mit 1 bis 5 Kohlenstoffatomen ist, insbesondere ein Methylrest und unabhängig voneinander y 0 bis 20 und x 1 bis 41 bedeuten
und insbesondere Polyoxyalkylenmonoamine der Formel

Z - O - CH₂ - CH₂ - [O-CH₂-CH-(CH₃)]_{z} NH₂

verwendet, in der z 1 bis 20, insbesondere 9 bis 18, ist.

Einige ausgewählte der vorstehend beschriebenen Monoamin-Blockpolymere mit Oxyäthylen- und Oxypropylengruppen werden z. B. von der Firma Texaco Chemical Co., Inc. unter der Handelsbezeichnung ®Jeffamine M-Serie vertrieben. Besonders erwähnt seien hier die ®Jeffamine-Typen M 600 und M 715.

Die gegebenenfalls mitverwendeten Polycarbonsäuren (A3) sind vorzugsweise langkettige Dicarbonsäuren. Beispielsweise seien genannt aliphatische und cycloaliphatische Dicarbonsäuren, deren aliphatischer Rest im allgemeinen 1 bis 50, vorzugsweise 2 bis 44 Kohlenstoff-Atome enthält, wie z. B. Bernsteinsäure, Glutarsäure, Adipinsäure, Korksäure, Azelainsäure, Sebacinsäure und Dodecandisäure. Geeignete cycloaliphatische Dicarbonsäuren, deren cycloaliphatischer Rest zumeist 5 bis 12, vorzugsweise 6 bis 8 C-Atome umfaßt, sind z. B. die verschiedenen Cyclohexandicarbonsäure-Isomeren, Hexahydrophthalsäure und Tetrahydrophthalsäure.

Eingesetzt werden bevorzugt dimere Fettsäuren, die aus ein- oder mehrfach ungesättigten natürlichen oder synthetischen einbasischen aliphatischen Fettsäuren mit 16 bis 22 Kohlenstoffatomen, bevorzugt 18 C-Atomen, nach bekannten Methoden, wie z. B. thermische oder katalytische Polymerisation oder durch Copolymerisation in Gegenwart von polymerisationsfähigen Verbindungen, wie z.B. Styrol oder Homologen und Cyclopentadien hergestellt werden. Insbesondere werden Dimerfettsäuren mit einer Säurezahl von 150 bis 230 mg KOH / g verwendet.

Weiter können auch Oxyalkylen-, vorzugsweise Oxyäthylengruppen enthaltende Dicarbonsäuren eingesetzt werden, die der Formel

HOOC - CH₂ - [OR¹⁰]ₙ - O - CH₂ COOH

genügen, in der R¹⁰ ein verzweigter oder unverzweigter Alkylenrest mit 2 bis 5, vorzugsweise 2 C-Atomen und n 0 oder eine ganze Zahl von 1 bis 300, vorzugsweise 1 bis 50 und insbesondere 1 bis 25, ist. Beispiele für diese Verbindungen sind: 3,6-Dioxaoctandisäure, 3,6,9-Trioxaundecandisäure, Polyglykoldisäure mit einer Molmasse von 400 bis 800, bevorzugt von ca. 600 g/mol oder Mischungen aus solchen Säuren. Die Herstellung dieser Verbindungen ist bekannt (vgl. beispielsweise die DE-OS 2 936 123) und erfolgt z. B. durch Oxidation von Polyglykolen in Gegenwart von Katalysatoren.

Die sterisch gehinderten Amine (B2) entsprechen der Formel 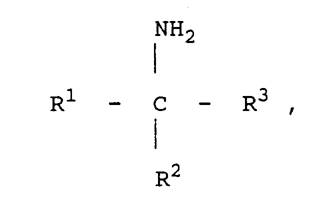
in der bedeuten
- R¹, R² und R³: jeweils unabhängig voneinander einen verzweigten oder unverzweigten aliphatischen, cycloaliphatischen, araliphatischen oder aromatischen, gegebenenfalls durch Hydroxy-, Alkoxy- oder Halogen-Gruppen substituierten Kohlenwasserstoffrest mit 1 bis 30 Kohlenstoffatomen, wobei
- R² und R³: jeweils unabhängig voneinander auch Wasserstoff bedeuten können,
mit der Maßgabe, daß die Aminogruppe nicht direkt an einem Aromaten gebunden ist und für den Fall, daß R² und R³ Wasserstoff sind, der verbleibende Rest R¹ einer der folgenden Substituenten ist 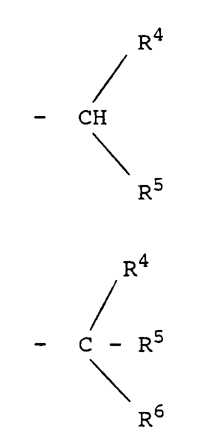 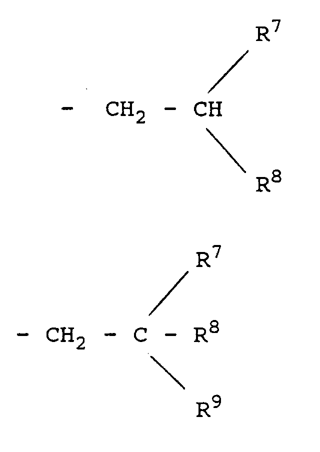
wobei die Reste
- R⁴ bis R⁹: jeweils unabhängig voneinander die Bedeutung eines verzweigten oder unverzweigten aliphatischen, cycloaliphatischen, araliphatischen oder aromatischen, gegebenenfalls durch Hydroxy-, Alkoxy- oder Halogen-Gruppen substituierten Kohlenwasserstoffrests mit 1 bis 30 Kohlenstoffatomen haben, und
- R¹ und R²: einen gegebenenfalls substituierten cycloaliphatischen Ring mit bis zu 8 Kohlenstoffatomen bilden können, wobei
- R³: dann ein Wasserstoffatom bedeutet.

Als sterisch gehinderte Amine (B2) können zur Herstellung der erfindungsgemäßen 1,2-Epoxidverbindungen beispielsweise eingesetzt werden t-Butylamin (2-Methyl-2-aminopropan), 2-Methyl-2-butylamin, t-Alkylamine der Rohm und Haas Company wie ®Primene TOA (t-Octylamin = 1,1,3,3-Tetramethylbutylamin), ®Primene 81 R (t-Alkylamine C 12 - C 14), ®Primene JM-T (t-Alkylamine C 16 - C 22), 2-Amino-2-methyl-1-propanol, 2-Amino-2-äthyl-1,3-propandiol, Tris(hydroxymethyl)aminomethan, Isopropylamin (2-Aminopropan), sek. Butylamin (2-Aminobutan), 2-Amino-1-butanol, 3-Methyl-2-butylamin, 2-Pentylamin, 3-Pentylamin, Cyclopentylamin, 4-Methyl-2-pentylamin, Cyclohexylamin, 2-Heptylamin, 3-Heptylamin, 2-Methyl-cyclohexylamin, 4-tert. Butyl-cyclohexylamin, 3-Amino-2,4-dimethylpentan, 6-Methyl-2-heptanamin, 1-Phenyl-äthylamin (1-Amino-1-phenyläthan), 1-Methyl-3-phenylpropylamin, Cyclododecylamin, besonders bevorzugt sind 2-Aminobutan und Cyclohexylamin.

Weiterhin sind geeignet: Isobutylamin (2-Methyl-1-propanamin), 2-Methylbutylamin (1-Amino-2-methylbutan), Isoamylamin (Isopentylamin = 1-Amino-3-methylbutan), Furfurylamin, Benzylamin, 4-Methoxy-benzylamin, 2-Äthylhexylamin, Isononylamin (Gemisch isomerer Nonylamine, das zu ca. 90 % aus 3,5,5-Trimethylhexylamin besteht), besonders bevorzugt ist 2-Äthylhexylamin. Es können auch Mischungen verschiedener solcher sterisch gehinderter Monoamine verwendet werden.

Die Epoxidverbindungen (B) werden im allgemeinen zu 1 bis 40 %, insbesondere 1 bis 15 %, bezogen auf die Summe der Massen der Komponmenten A und C eingesetzt.

Die erfindungsgemäß eingesetzten ω-Imidazolyl-alkanoguanamine (D) genügen der Formel 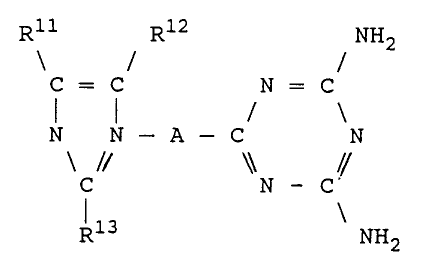
wobei A für einen Alkylenrest mit 1 bis 8 C-Atomen steht, der gegebenenfalls zusätzlich mit Alkylgruppen substituiert sein kann, R¹¹, R¹² und R¹³ jeweils unabhängig voneinander für Wasserstoff oder einen Alkyl- oder Arylrest mit 1 bis 20 C-Atomen. Beispiele für geeignete Verbindungen sind 3-(2'-Methylimidazolyl)propanoguanamin, 3-(2'-Äthyl-4-methylimidazolyl)propanoguanamin und 3-(2'-Undecylimidazolyl)propanoguanamin. Besonders geeignet für die Erfindung sind Gemische von mindestens zwei verschiedenen ω-Imidazolyl-alkanoguanaminen. Bevorzugt werden die Komponenten (D) als Pulver mit einer mittleren Korngröße unter 30 µm eingesetzt.

Als latente Härter können alle für diesen Zweck bekannten Verbindungen eingesetzt werden, die bei Raumtemperatur oder bei erhöhter Temperatur, z.B. bis 80 °C, gegenüber dem Epoxidharz inert sind, aber schnell unter Vernetzung des Harzes reagieren, sobald diese Temperatur überschritten ist.

Beispielsweise lassen sich Bortrifluorid-Amin-Addukte einsetzen, wobei tertiäre aliphatische Amine besonders bevorzugt werden. Geeignet ist ebenfalls Dicyandiamid, das vorzugsweise in fein gemahlener Form eingesetzt wird. Dicyandiamid (Cyanoguanidin, ®Dyhard 100 der SKW) ist bei Raumtemperatur selbst kein Härtungsmittel. Es zerfällt bei höheren Temperaturen und bewirkt über reaktive Spaltprodukte eine Härtung des Epoxidsystems. Weitere geeignete latente Härter sind beispielsweise aromatische Amine, wie z. B. 4,4'- oder 3,3'-Diaminodiphenylsulfon, Guanidine, wie z. B. 1-o-Tolylbiguanid, modifizierte Polyamine, wie z. B. ®Anchor 2014 S (Anchor Chemical UK Limited, Manchester), Carbonsäurehydrazide, wie z. B. Adipinsäuredihydrazid, Isophthalsäuredihydrazid oder Anthranilsäurehydrazid, Triazinderivate, wie z. B. 2-Phenyl-4,6-diamino-s-triazin (Benzoguanamin) und Melamin.

Die Härtungsmittel (E) werden im allgemeinen in Mengen von 0,01 bis 50, vorzugsweise von 1 bis 40 % eingesetzt, bezogen auf die Summe der Massen der Komponenten (A), (C) und gegebenenfalls (B). Die Härtung mit Dicyandiamid erfolgt im allgemeinen in Mengen von 0,01 bis 20, vorzugsweise 0,5 bis 15 %, bezogen auf die Summe der Massen der Komponenten (A), (C) und gegebenenfalls (B). Der Beschleuniger (D) wird im allgemeinen in Mengen von 0,01 bis 10 %, vorzugsweise 0,1 bis 2 %, bezogen auf die Summe der Massen der Komponenten (A), (C) und ggf. (B) zugesetzt. Durch die Zugabe des Beschleunigers (D) kann die Dicyandiamidmenge gegenüber einem nicht beschleunigten System im allgemeinen erheblich reduziert werden.

Bei der Einarbeitung des Härters (E) sowie des Beschleunigers (D) muß die Temperatur unterhalb der Reaktionstemperatur des entsprechenden Harz/Härter-Systems liegen. Dabei kann es notwendig werden, bei dem Dispergiervorgang das Reaktionsgemisch zu kühlen.

Die weiteren Zusätze (F) sind beispielsweise Verlaufmittel, Haftvermittler, Hydrophobierungsmittel, Farbstoffe, Pigmente, Verstärker sowie inerte Füllstoffe.

Als Verlaufmittel können zum Beispiel Acetale, wie Polyvinylformal, Polyvinylacetal, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente (A) in Mengen von 0,1 - 4 Gew.-%, vorzugsweise 0,2 - 2,0 Gew.-% zugesetzt werden.

Als Haftvermittler und Hydrophobierungsmittel können u. a. Silane eingesetzt werden. Diese können sowohl mit dem anorganischen Untergrund als auch mit dem organischen Polymeren (Klebstoff, Beschichtungsmasse oder dgl.) unter Ausbildung von festen Bindungen reagieren. Durch die Haftverbesserung können die mechanischen Werte, insbesondere nach Feuchtigkeitsbeanspruchung, verbessert werden. Entsprechende Produkte werden z. B. unter der Bezeichnung ®Dynasylan von Hüls Aktiengesellschaft, Marl bzw. als ®Silan von Degussa AG angeboten.

Die Farbstoffe und Pigmente können sowohl anorganischer als auch organischer Natur sein. Beispielsweise seien genannt Titandioxid, Zinkoxid, Ruß, Leitfähigkeitsruß wie z. B. ®Printex XE 2 der Degussa AG. Die organischen Farbstoffe und Pigmente sind so auszuwählen, daß sie bei den Härtungstemperaturen stabil sind und zu keinen untolerierbaren Farbtonverschiebungen führen.

Weitere geeignete Füllstoffe können verstärkend wirken (z.B. faserförmige Füllstoffe wie Glas-, Mineral- oder Textilfasern) oder ohne wesentlichen Einfluß auf die mechanischen Eigenschaften sein (inerte Füller wie zum Beispiel Quarzmehl, Silikate, Kreide, Gips, Kaolin, Glimmer, Schwerspat, organische Füllstoffe wie z. B. Holzmehl oder Polyamidpulver). Als Thixotropier- und Verdickungsmittel können beispielsweise ®Aerosil (hochdisperses Siliciumdioxid z. B. die Typen 150, 200, R 202, R 805 der Degussa), Bentonit-Typen (z. B. ®Sylodex 24 von Grace) sowie ®Bentone (NL Chemicals) verwendet werden.

Die Einarbeitung der Zusatz- und Füllstoffe erfolgt im allgemeinen mit Zwangsmischern, wie z. B. Dissolvern und Knetern. Auch hier kann es notwendig sein, durch eine Kühlung des formulierten erfindungsgemäßen Harz/Härter-Systems eine vorzeitige Reaktion der Komponenten zu vermeiden.

Die erfindungsgemäßen Epoxidharzmassen werden hergestellt durch Umsetzung eines Epoxidharzes (A1) auf Basis eines mehrwertigen Phenols mit einem Polyoxyalkylenmonoamin (A2), gegebenenfalls Zusatz eines weiteren Epoxids (C) und anschließendem Vermischen mit latentem Härter (E) und mindestens einem ω-Imidazolyl-alkanoguanamin (D). Zu dem Epoxidharz (A) aus der Umsetzung von (A1) und (A2) kann vorzugsweise ein weiteres Epoxidaminaddukt aus Polyepoxid (B1) und einem sterisch gehinderten Amin (B2) zugegeben werden.

Die erfindungsgemäßen elastischen Epoxidharzmassen lassen sich auf Grund iherer raschen Härtung überall dort einsetzen, wo das beschichtete Substrat thermisch möglichst wenig belastet werden soll. Sie ergeben elastische Beschichtungen und elastische Verklebungen. Beispiele sind Beschichtungen und Verklebungen bei thermoplastischen Kunststoffen und Mehrschichtverbundmaterialien mit Komponenten unterschiedlicher Ausdehnungskoeffizienten, die bei längerer Temperaturbeanspruchung zum Delaminieren neigen.

Unter "Epoxidäquivalent" soll im folgenden die molare Masse, dividiert durch die mittlere Anzahl der Epoxidgruppen pro Molekül, verstanden werden.

### BEISPIELE

### I. Herstellung der Epoxidverbindungen (Komponente A)

### Beispiel 1

Zu 1740 Gewichtsteilen eines flüssigen Epoxidharzes auf Bisphenol-A-Basis mit einem Epoxidäquivalent (EV) von 183 g/mol werden in einem Vierhalskolben mit Rührer, Thermometer und Kühler unter Stickstoff 1260 Gewichtsteile ®Jeffamine M 1000 gegeben. Dann wird auf 90 °C geheizt und solange bei dieser Temperatur gehalten (ca. 5 Stunden), bis der EV konstant bleibt. Nach einer Stunde Nachhaltezeit wird gekühlt und der Kolben entleert. Das Epoxidharz hat folgende Kenndaten:

| | |
|---|---|
| Epoxidäquivalent | 417 g/mol |
| Aminzahl | 23,5 mg KOH / g |
| Viskosität 25 °C | 7590 mPa.s |

### Beispiel 2

Zu 580 Gewichtsteilen eines flüssigen Epoxidharzes auf Bisphenol-A-Basis mit einem Epoxidäquivalent (EV) von 183 g/mol werden in einem Vierhalskolben mit Rührer, Thermometer und Kühler unter Stickstoff 210 Gewichtsteile ®Jeffamine M 2005 gegeben. Dann wird auf 90 °C erwärmt und solange bei dieser Temperatur gehalten (ca. 2 Stunden) bis der EV konstant bei 260 liegt. Nun werden 210 Gewichtsteile ®Jeffamine M 600 zugesetzt und das Reaktionsgemisch weiter bei 90 °C erwärmt. Nach 3 Stunden liegt der EV bei 427. Nach einer Stunde Nachhaltezeit wird gekühlt und der Kolben entleert. Das Epoxidharz hat folgende Kenndaten:

| | |
|---|---|
| Epoxidäquivalent | 444 g/mol |
| Aminzahl | 25,7 mg KOH / g |
| Viskosität 25 °C | 17410 mPa.s |

### II. Herstellung der Einkomponenten-Epoxidmischungen

In die Epoxidverbindungen (A) wird als latentes Härtungsmittel (E) Dicyandiamid (®Dyhard 100, SKW Trostberg) in 15 Minuten mit einem Dissolver mit 10000 Umdrehungen/Minute eindispergiert. Danach wird innerhalb von 5 bis 10 Minuten der Beschleuniger (D) 3-(2'-Methylimidazolyl)propanoguanamin mit einer durchschnittllichen Korngröße von 20 µm bzw. in den Vergleichsbeispielen 2-Methylimidazol (®Dyhard MI) ebenfalls mit 10000 Umdrehungen/Minute eingerührt. Anschließend wird das ®Aerosil portionsweise und je nach Viskosität der Mischung mit 250 bis 1200 Umdrehungen/Minute eingearbeitet.

Auf diese Weise werden aus den Epoxidharzen I.1 und I.2 und dem flüssigen Epoxidharz mit Epoxidäquivalent 183 die Einkomponenten-Epoxid-Mischungen II.1 bis II.6 angefertigt (Tabelle 1).

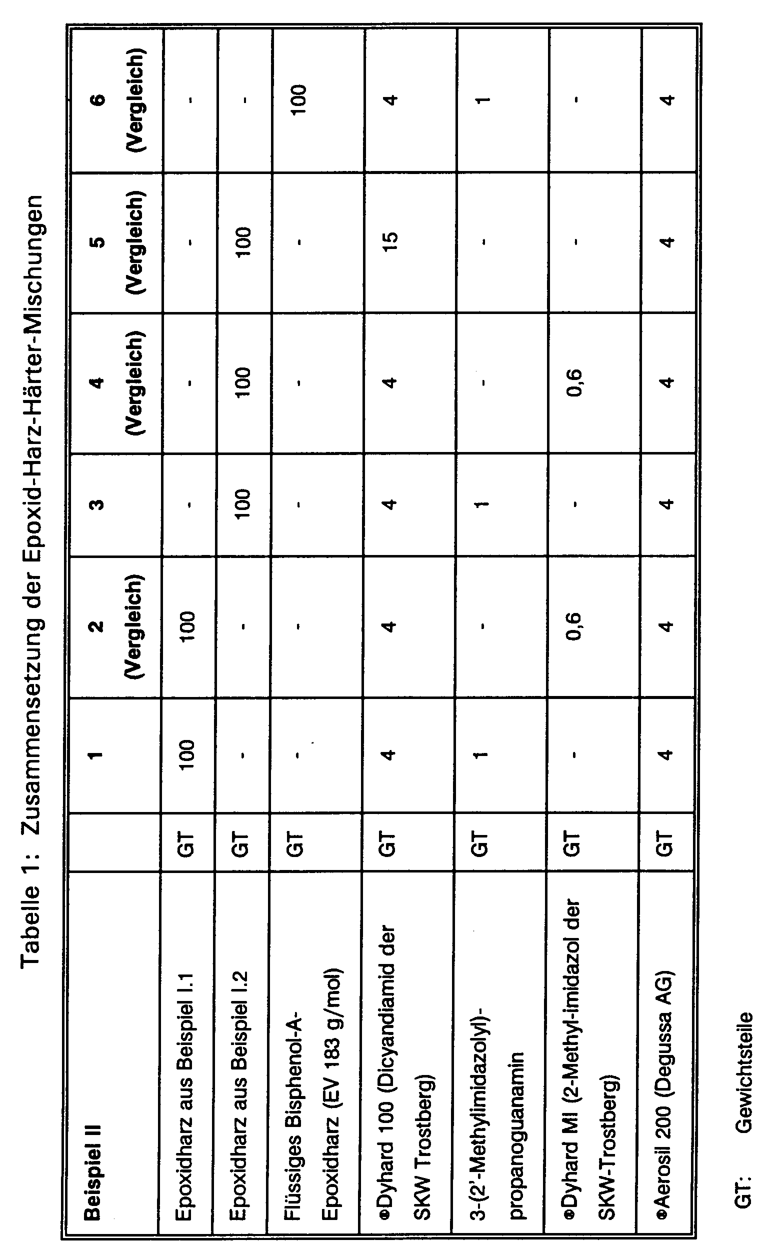

### III. Prüfverfahren

### 1. Lagerstabilität

Die Epoxidharz-Härter Mischung wird bei Raumtemperatur gelagert und wöchentlich auf Viskositätszunahme geprüft.

### 2. Extraktionswerte

### 2.1. Prüfbleche

30 x 110 mm große Stahlbleche Qualität ST 1203 von 0,5 mm Dicke werden mit Aceton entfettet, mit Enthaftungsmittel ®Trikote 44 NC behandelt und 30 Minuten bei 180 °C eingebrannt.

### 2.2. Härtung der Einkomponenten-Epoxid-Mischungen

Nach 2.1. vorbehandelte Prüfbleche werden mit einem 200 µm Film der Epoxidharz-Härter-Mischung überzogen und 60 Sekunden bei 240 °C in einem Mathis-Ofen ausgehärtet. Nach dem Abkühlen wird der Film abgezogen.

### 2.3. Extraktion

2 g des gehärteten Films werden auf 1 mg in einem Erlenmeyer-Kolben eingewogen und mit 80 ml einer Mischung aus Ethanol/Wasser 1 + 1 übergossen und 7 Tage stehengelassen. Dabei wird täglich einmal kurz umgeschüttelt. Die Lösung wird von dem gehärteten Material über ein Faltenfilter abfiltriert und das Filtrat am Rotationsverdampfer in einem Rundkolben bei 70 °C und 30 mbar eingedampft. Der Rückstand wird bis zur Massenkonstanz am Rotationsverdampfer getrocknet.

### 3. Zugscherfestigkeit

Die Zugscherprüfkörper werden nach DIN 53 281 Teil 2 aus Stahlblech Qualität ST 1405 von 0,75 mm Dicke hergestellt. Die Stahlstreifen werden im nicht entfetteten Zustand auf eine Fläche von 400 mm² überlappend verklebt. Mit Abstandshaltern aus PTFE-Folie wird eine definierte Klebstoffschicht von 0,2 mm eingestellt. Die Aushärtung des Klebstoffes erfolgt in 240-280 Sekunden bei 240 °C. Nach dem Erkalten der Prüfkörper wird seitlich ausgetretener Klebstoff abgeschnitten.

### 3.1. Messung der Zugscherfestigkeit

Die Zugscherfestigkeit der nach 3.1. angefertigten Prüfkörper wird nach DIN 53 283 als Mittelwert von 5 Einzelwerten auf einer Zugprüfmaschine nach DIN 51 221, Teil 2 der Firma Zwick gemessen.

### 4. Schälwiderstand

### 4.1. Vorbereitung der Prüfkörper zur Messung des Schälwiderstandes

Die Prüfkörper werden nach DIN 53 281, Teil 2 aus Stahlblech Qualität ST 1203 von 0,5 mm Dicke hergestellt. Die Stahlstreifen werden mit Aceton entfettet und mit Hilfe eines Schraubstocks zu einem Winkel von 90° gebogen. Der nach II. hergestellte Klebstoff wird mit einem Filmziehgerät in einer Schicht von 0,1 mm auf die Außenfläche des längeren Schenkels aufgetragen. Der so mit Klebstoff beschichtete Metallstreifen wird nun mit einem weiteren nicht mit Klebstoff beschichteten Metallstreifen so zusammengefügt, daß sich ein klebefugensymmetrischer T-förmiger Prüfkörper mit einer Klebefläche von 185 x 30 mm ergibt. Die Aushärtung des Klebstoffes erfolgt in 240 - 280 Sekunden bei 240 °C. Nach dem Abkühlen wird seitlich ausgetretener Klebstoff abgeschnitten.

### 4.2. Messung des Schälwiderstandes

Der Schälwiderstand der nach 4.1. hergestellten Prüfkörper wird nach DIN 53 282 als Mittelwert aus 5 Einzelwerten auf einer Zugprüfmaschine nach DIN 51 221, Teil 3 der Firma Zwick bestimmt.

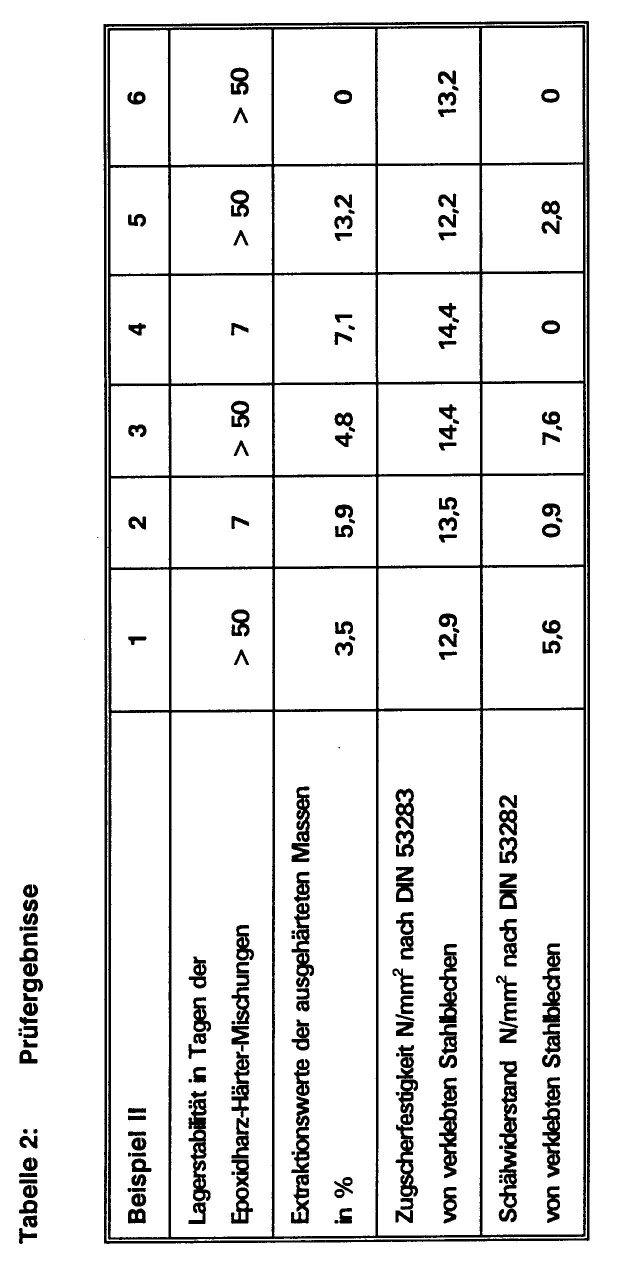

### Erläuterungen zu den Beispielen

Die erfindungsgemäßen Beispiele II.1 und II.3 erfüllen die Forderung nach dem gemeinsamen Eigenschaften: Elastizität der gehärteten Masse, ausgezeichnete Lagerstabilität und niedrige Viskosität der Harz-Härter-Mischung, Härtung in extrem kurzer Zeit (ca. 60 Sekunden) und optimale Beständigkeit der erhaltenen Massen in Ethanol/Wasser.

Vergleichsbeispiel 6 (entspricht prinzipiell der JP-5-163331) liefert eine harte Masse mit der die technisch geforderte hohe Elastizität des gehärteten Materials nicht erreicht wird (kein meßbarer Schälwiderstand).

In den Vergleichsbeispielen II.2 und II.4 wird als Beschleuniger nach dem Stand der Technik ein Imidazol, das hochwirksame 2-Methylimidazol, eingesetzt, mit dem zwar relativ niedrige Extraktionswerte im Vergleich zu nicht beschleunigten Systemen (wie Vergleich II.5) erzielt werden, mit dem aber die Lagerstabilität des flüssigen Harz-Härter-Systems unzureichend ist.

## Patentansprüche

1. Elastische Epoxidharz-Zusammensetzung enthaltend
(A) Verbindungen mit mindestens zwei 1,2-Epoxidgruppen, die durch Umsetzung von Polyepoxiden (A1) mit mindestens zwei Epoxidgruppen pro Molekül und Polyoxyalkylenmonoaminen (A2) sowie gegebenenfalls Polycarbonsäuren (A3) erhältlich sind,
(B) gegebenenfalls Verbindungen mit mindestens zwei 1,2-Epoxidgruppen, die durch Umsetzung von Polyepoxiden (B1) mit mindestens zwei 1,2-Epoxidgruppen pro Molekül und sterisch gehinderten aliphatischen Monoaminen (B2) erhältlich sind,
(C) 1,2-Epoxidverbindungen, die ausgewählt sind aus Polyepoxiden, die verschieden sind von (A1) und (B1), und den nicht umgesetzten Anteilen der Verbindungen (A1) oder (B1) aus der Herstellung der Verbindungen (A) und (B),
(D) ω-Imidazolyl-alkanoguanamine,
(E) latente Härtungsmittel,
(F) und gegebenenfalls weitere Zusätze.

2. Epoxidharz-Zusammensetzung gemäß Anspruch 1, dadurch gekennzeichnet, daß die Polyepoxide (A1), (B1) und (C) jeweils für sich ausgewählt sind aus den Gruppen der Glycidyläther (A11) von Alkoholen und Phenolen mit jeweils mindestens zwei Hydroxygruppen, wobei jeweils mindestens zwei der Hydroxygruppen glycidyliert sind, der Gruppe der Polyepoxide (A12) von mehrfach ungesättigten aliphatischen oder gemischt aliphatisch-aromatischen Verbindungen und der Gruppe der Glycidylester (A13) von mehrwertigen organischen Säuren.

3. Epoxidharz-Zusammensetzung gemäß Anspruch 1, dadurch gekennzeichnet, daß die Polyoxyalkylenmonoamine (A2) ausgewählt sind aus der Gruppe der α-Alkoxy-ω-2-aminoalkyl-polyoxyalkylene.

4. Epoxidharz-Zusammensetzung gemäß Anspruch 3, dadurch gekennzeichnet, daß der 2-Aminoalkylrest ein 2-Aminopropylrest ist und die Alkylenreste in den α-Alkoxy-ω-2-aminoalkyl-polyoxyalkylenen ausgewählt sind aus den Äthylen- und 1,2-Propylenresten, die jeweils für sich, in Mischung oder in Blockstruktur die Polyoxyalkylenkette bilden können.

5. Epoxidharz-Zusammensetzung gemäß Anspruch 1, dadurch gekennzeichnet, daß die sterisch gehinderten Amine (B2) der Formel 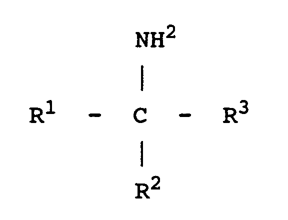 genügen, in der bedeuten
R¹, R² und R³ jeweils unabhängig voneinander einen verzweigten oder unverzweigten aliphatischen, cycloaliphatischen, araliphatischen oder aromatischen, gegebenenfalls durch Hydroxy-, Alkoxy- oder Halogen-Gruppen substituierten Kohlenwasserstoffrest mit 1 bis 30 Kohlenstoffatomen, wobei
R² und R³ jeweils unabhängig voneinander auch Wasserstoff bedeuten können,
mit der Maßgabe, daß die Aminogruppe nicht direkt an einem Aromaten gebunden ist und für den Fall, daß R² und R³ Wasserstoff sind, der verbleibende Rest R¹ einer der folgenden Substituenten ist 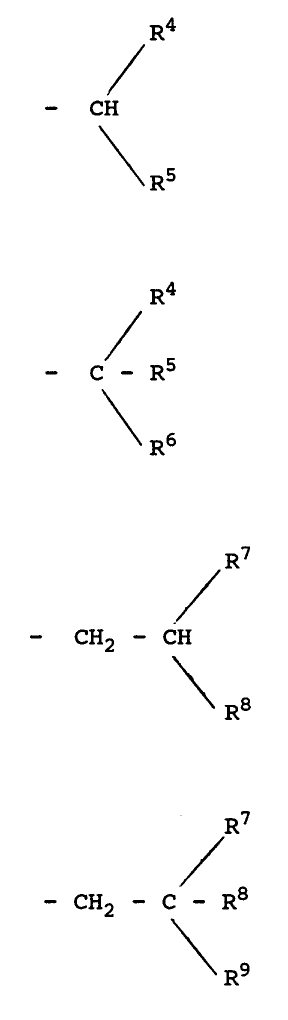 wobei die Reste
R⁴ bis R⁹ jeweils unabhängig voneinander die Bedeutung eines verzweigten oder unverzweigten aliphatischen, cycloaliphatischen, araliphatischen oder aromatischen, gegebenenfalls durch Hydroxy-, Alkoxy- oder Halogen-Gruppen substituierten Kohlenwasserstoffrests mit 1 bis 30 Kohlenstoffatomen haben, und
R¹ und R² einen gegebenenfalls substituierten cycloaliphatischen Ring mit bis zu 8 Kohlenstoffatomen bilden können, wobei
R³ dann ein Wasserstoffatom bedeutet.

6. Epoxidharz-Zusammensetzung gemäß Anspruch 1, dadurch gekennzeichnet, daß die Polycarbonsäuren (A3) aliphatische oder cycloaliphatische Dicarbonsäuren mit insgesamt 3 bis 52 Kohlenstoffatomen sind.

7. Epoxidharz-Zusammensetzung gemäß Anspruch 1, dadurch gekennzeichnet, daß die Polycarbonsäuren (A3) ausgewählt sind aus der Gruppe der Dicarbonsäuren der Formel
(1) HOOC - CH₂ - [OR¹⁰]ₙ - O - CH₂ - COOH
sind, in der bedeuten
R¹⁰ = Alkylenrest mit 2 bis 5 C-Atomen und
n = 0 oder eine ganze Zahl von 1 bis 300, und aus den Dimer-Fettsäuren mit einer Säurezahl von 150 bis 230 mg KOH/g.

8. Epoxidharz-Zusammensetzung gemäß Anspruch 1, dadurch gekennzeichnet, daß die ω-Imidazolyl-alkanoguanamine ausgewählt sind aus der Gruppe der Verbindungen gemäß der Formel 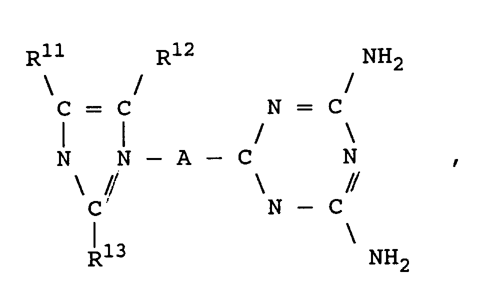 wobei A für einen Alkylenrest mit 1 bis 8 C-Atomen steht, der gegebenenfalls zusätzlich mit Alkylgruppen substituiert sein kann, und R¹¹, R¹² und R¹³ jeweils unabhängig voneinander Wasserstoff oder einen Alkyl- oder Arylrest mit 1 bis 20 C-Atomen bedeuten.

9. Epoxidharz-Zusammensetzung gemäß Anspruch 1, dadurch gekennzeichnet, daß ein Gemisch von mindestens zwei verschiedenen ω-Imidazolyl-alkanoguanaminen eingesetzt wird.

10. Epoxidharz-Zusammensetzung gemäß Anspruch 1, dadurch gekennzeichnet, daß die latenten Härtungsmittel (E) ausgewählt sind aus der Gruppe der Addukte von Bortrifluorid und Aminen sowie Dicyandiamid.

11. Epoxidharz-Zusammensetzung gemäß Anspruch 1, dadurch gekennzeichnet, daß die Epoxidverbindungen (B) in einer Menge von 1 bis 40 % bezogen auf die Summe der Massen der Komponenten (A) und (C) eingesetzt werden.

12. Verfahren zur Herstellung von elastischen Epoxidharzmassen nach Anspruch 1, dadurch gekennzeichnet, daß ein Epoxidharz auf Basis eines mehrwertigen Phenols mit einem Polyoxyalkylenmonoamin zu einem Epoxid-Amin-Addukt umgesetzt wird, das dann mit einem latenten Härter und mindestens einem ω-Imidazolyl-alkanoguanamin vermischt wird.

13. Verfahren zur Herstellung von elastischen Epoxidharzmassen nach Anspruch 1, dadurch gekennzeichnet, daß ein Epoxidharz auf Basis eines mehrwertigen Phenols mit einem Polyoxyalkylenmonoamin zu einem Epoxid-Amin-Addukt umgesetzt wird, dieses dann mit einem weiteren Epoxid-Aminaddukt aus einem Epoxidharz und einem sterisch gehinderten Amin sowie mit einem latenten Härter und mindestens einem ω-Imidazolyl-alkanoguanamin vermischt wird.

14. Verwendung der elastischen Epoxidharzmassen nach Anspruch 1 als elastische Beschichtung.

15. Verwendung der elastischen Epoxidharzmassen nach Anspruch 1 als elastischer Kleber.
